# EUROPEAN PATENT SPECIFICATION

(11) **EP 3 007 470 B1**
(45) Date of publication and mention of the grant of the patent: **23.08.2017**
(21) Application number: 15172501.7
(22) Date of filing: 17.06.2015
(51) Int. Cl.: G06F 9/45, H04W 4/00

(54) **PERFORMANCE IMPROVEMENT METHOD IN INSTANCE HOSTING ENVIRONMENT AND SERVICE SYSTEM THEREFOR**
LEISTUNGSVERBESSERUNGSVERFAHREN IN EINER INSTANZ-HOSTING-UMGEBUNG UND SYSTEM DAFÜR
PROCÉDÉ D'AMÉLIORATION DE PERFORMANCE DANS UN ENVIRONNEMENT D'HÉBERGEMENT D'INSTANCE ET SYSTÈME DE SERVICE ASSOCIÉ

(30) Priority: 08.10.2014 KR 20140135838
(43) Date of publication of application: 13.04.2016
(73) Proprietor: Korea Advanced Institute of Science and Technology, Daejeon 305-701 (KR)
(72) Inventor: CHOI, Jun Kyun, 305-701 Daejeon (KR); YANG, Jin Hong, 305-732 Daejeon (KR); PARK, Hyo Jin, 305-701 Daejeon (KR); KIM, Yong Rok, 305-701 Daejeon (KR); JEON, Kyu Yeong, 305-732 Daejeon (KR)
(74) Representative: Schaumburg und Partner Patentanwälte mbB

(56) References cited:
- EP-A1- 2 840 813
- US-A1- 2011 213 871
- US-A1- 2013 290 305
- US-A1- 2014 289 366
- "Gateway Management Object Technical Specification ; OMA-TS-GwMO-V1_1-20140730-D", OMA-TS-GWMO-V1_1-20140730-D, OPEN MOBILE ALLIANCE (OMA), 4330 LA JOLLA VILLAGE DR., SUITE 110 SAN DIEGO, CA 92122 ; USA , no. 1.1 30 July 2014 (2014-07-30), pages 1-92, XP064179560, Retrieved from the Internet: URL:ftp/Public_documents/DM/DM-GWMO/Perman ent_documents/ [retrieved on 2014-07-30]

## Description

### BACKGROUND

Embodiments of the inventive concepts described herein relate to a performance improvement method in an instance hosting environment and a service system therefor.

Internet of things (IoT) has been evolved from an existing ubiquitous sensor network (USN) or machine to machine (M2M) communication. While the existing M2M communication has primarily aimed at communication between communication equipment (e.g., an end device) and a person, IoT has enabled communication between a thing, which is generally visible to users, such as a telephone, a book, and a thermometer, and a person by expanding the scope of things. For example, IoT may indicate a machine-and-space connecting network in which three distributed environmental elements, such as a person, a thing, and a service, cooperatively establish intelligent relationships, such as sensing, networking, and information processing, without explicit intervention of the person.

In addition to such IoT, a variety of concepts and techniques such as Web of Things (WoT) or Web of Objects (WoO) have been studied and developed. With the development and distribution of the concepts and the techniques, use of devices (e.g., gadget devices, sensor devices, actuators, and the like) via which users may easily connect to the Internet, will increase.

In particular, recently, web linkage gadget devices have been released to the market in various types. Many sensor devices provide a control and monitoring function via the web. Also, terminals for providing a control function via the web may be embedded with a web server function or may include a function which may be controlled via an online web service.

However, the aforementioned techniques, devices, and services are individually managed. Therefore, this results in an inconvenience to users. For example, even though there are a plurality of devices around a user, he or she may need to control each device via an individual access path (e.g., a universal resource locator (URL)). When a device autonomously provides a web access function (e.g., a server function), there is a need for network linkage and a URL (e.g., an Internet protocol (IP) address) for accessing an individual device. When a service is provided via an exclusive web service, there is a need for generating access authority for each service and there is a need for a URL for each service.

For example, an apparatus for exchanging a data message in IoT is disclosed in Korean Patent Laid-open Publication No. 10-2014-0076948.

Also, data individually managed may not be readily used via an organic linkage. For example, in case of a sensor for controlling a boiler installed in a house, a sensor device may directly gather only limited ambient environment information such as a presence of a person residing in the house, an inside temperature, and a time zone. If the sensor device may additionally use external information (e.g., an outside temperature and schedule information of a user, and the like), a more effective control function may be provided. However, due to data individually managed for each technique, device, or service, it is difficult to organically link and use the data.

In an instance hosting environment for operating a virtualized device, a device virtualized as a virtual object (VO) type to effectively operate an IoT device operates with an instance type according to a call period of an individual device or a connected service. In case of a VO written based on a script language such as Java script, there is an issue in that a code of the VO is compiled whenever an individual instance is called in an instance hosting environment. To load an instance of an individual VO causes consumption of central processing unit (CPU) resources. Due to environmental characteristics of IoT, periodic and continuous sensing of sensors causes frequent communication with devices. Frequent calling of a VO to process this communication leads to frequently compiling a code. Also, the updating of a value received from an individual device results in continuously compiling a code in an instance pooling environment.
From each of the documents US 2011/213871 A1, XP064179560, US 2013/290305 A1 and EP 2 840 813 A1 service systems in an Internet of Things environment are known, which comprise an instance manager configured to manage generation and operation of an instance for a virtual object corresponding to an Internet of Things device.

### SUMMARY

The present invention is defined by the subject matter of the independent claims. Embodiments of the inventive concepts provide a service system in an instance hosting environment, for reducing the number of times a code is compiled to improve its performance by determining whether to filter data of an interface of a virtual object (VO) at a message router, and by skipping unnecessary calling of an instance according to a flag transmitted from the message router or by reusing an instance previously pooled in an instance pool at an instance lifecycle manager and a performance enhancement method thereof.

One aspect of embodiments of the inventive concept is directed to provide a service system in an Internet of Things (IoT) environment. The service system may include an instance manager configured to manage generation and operation of an instance for a virtual object corresponding to an IoT device. The instance manager may include an instance pool configured to pool the instance, a message router configured to filter a data stream according to the instance and to transmit the filtered result value together with the data stream, and an instance lifecycle manager configured to reuse the instance pooled in the instance pool according to the filtered result value or to skip calling of an instance according to the data stream.

The message router may compare raw-data by a predetermined stream-window size, may generate flag information indicating a change or a no-change of the data according to the compared result, and may transmit the generated flag information together with the data stream to the instance lifecycle manager.

The flag information may include information indicating one of a change and a no-change of data of the data stream.

The virtual object may include information indicating whether to perform filtering on the message router according to a characteristic of the corresponding IoT device. The message router may determine whether data of an interface of the virtual object are to be filtered, according to the information included in the virtual object. When the data of the interface of the virtual object are to be filtered, the message router may filter the data stream.

The filtered result value may include information about one of a change and a no-change of data of the data stream. When the data are the same according to the filtered result value, the instance lifecycle manager may reuse the instance pooled in the instance pool or may skip calling of an instance for a message of the IoT device.

Another aspect of embodiments of the inventive concept is directed to provide a performance improvement method in an Internet of things (IoT) environment. The performance improvement method may include receiving a message of an IoT device, by a message router of an instance manager configured to be included in a service system and to manage generation and operation of an instance for a virtual object corresponding to the IoT device, filtering data of the message, by the message router, and calling an instance lifecycle manager of the instance manager together with the result value of filtering the data, by the message router.

The result value of filtering the data may include information indicating the data of the message are changed from previous data or are the same as the previous data. When the data are the same as the previous data according to the result value of filtering the data, the instance lifecycle manager may reuse an instance pooled in an instance pool or may skip calling of an instance for the message.

The result value of filtering the data may include flag information indicating whether the data of the message are changed from previous data or are the same as the previous data. The calling of the instance lifecycle manager may include transmitting the message together with the flag information to the instance lifecycle manager.

The virtual object corresponding to the IoT device may include information indicating whether to perform filtering on the message router according to a characteristic of the IoT device. The performance improvement method may further include matching an identifier of the virtual object according to interface information, by the message router and determining whether the received message is to be filtered for an interface of the virtual object, by the message router.

Another aspect of embodiments of the inventive concept is directed to provide a performance improvement method in an Internet of things (IoT) environment. The performance improvement method may include verifying a flag value of a virtual object according to calling, according to the calling from a message router of an instance manager included in a service system, by an instance lifecycle manager of the instance manager and reusing an instance pooled in an instance pool of the instance manager or skip calling of an instance according to the flag value, by an instance lifecycle manager.

The flag value may include information which is a result value of filtering a message of an IoT device after the message router receives the message of the IoT device and indicates whether data of the message are changed from previous data or are the same as the previous data.

The reusing of the instance or the skipping of the instance may include when it is determined that data included in a message of an IoT device are the same as previous data according to the flag value, reusing the instance pooled in the instance pool or skipping the calling of the instance, and when the data included in the message are changed from the previous data, calling the corresponding instance.

The performance improvement method may further include when the calling of the instance is skipped, transmitting an instance call skip information to the message router.

The instance call skip information may be transmitted to a virtual object through a feeder interface of the virtual object corresponding to a message received by the message router.

### BRIEF DESCRIPTION OF THE FIGURES

The above and other objects and features will become apparent from the following description with reference to the following figures, wherein like reference numerals refer to like parts throughout the various figures unless otherwise specified, and wherein
FIG. 1 is a block diagram illustrating a configuration of a service system including an instance manager according to an exemplary embodiment of the inventive concept;
FIG. 2 is a flowchart illustrating a message routing process according to an exemplary embodiment of the inventive concept;
FIG. 3 is a flowchart illustrating a process of managing an instance call period per virtual object (VO) according to an exemplary embodiment of the inventive concept;
FIG. 4 is a drawing illustrating information including a VO according to an exemplary embodiment of the inventive concept;
FIG. 5 is a block diagram illustrating a configuration of an entire system for instance hosting according to an exemplary embodiment of the inventive concept;
FIG. 6 is a drawing illustrating the concept of interfaces of an instance according to an exemplary embodiment of the inventive concept;
FIG. 7 is a drawing illustrating functions for interfaces of an instance according to an exemplary embodiment of the inventive concept; and
FIG. 8 is a drawing illustrating an instance list page according to an exemplary embodiment of the inventive concept.

### DETAILED DESCRIPTION

Embodiments will be described in detail with reference to the accompanying drawings. The inventive concept, however, may be embodied in various different forms, and should not be construed as being limited only to the illustrated embodiments. Rather, these embodiments are provided as examples so that this disclosure will be thorough and complete, and will fully convey the concept of the inventive concept to those skilled in the art. Accordingly, known processes, elements, and techniques are not described with respect to some of the embodiments of the inventive concept. Unless otherwise noted, like reference numerals denote like elements throughout the attached drawings and written description, and thus descriptions will not be repeated. In the drawings, the sizes and relative sizes of layers and regions may be exaggerated for clarity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the inventive concept.

Spatially relative terms, such as "beneath", "below", "lower", "under", "above", "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" or "under" other elements or features would then be oriented "above" the other elements or features. Thus, the exemplary terms "below" and "under" can encompass both an orientation of above and below. The device may be otherwise oriented (rotated 90 degrees or at other orientations) and the spatially relative descriptors used herein interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Also, the term "exemplary" is intended to refer to an example or illustration.

It will be understood that when an element or layer is referred to as being "on", "connected to", "coupled to", or "adjacent to" another element or layer, it can be directly on, connected, coupled, or adjacent to the other element or layer, or intervening elements or layers may be present. In contrast, when an element is referred to as being "directly on," "directly connected to", "directly coupled to", or "immediately adjacent to" another element or layer, there are no intervening elements or layers present.

Unless otherwise defined, all terms (including technical and scientific terms) used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and/or the present specification and will not be interpreted in an idealized or overly formal sense unless expressly so defined herein.

Hereinafter, a description will be given in detail for exemplary embodiments of the inventive concept with reference to the accompanying drawings.

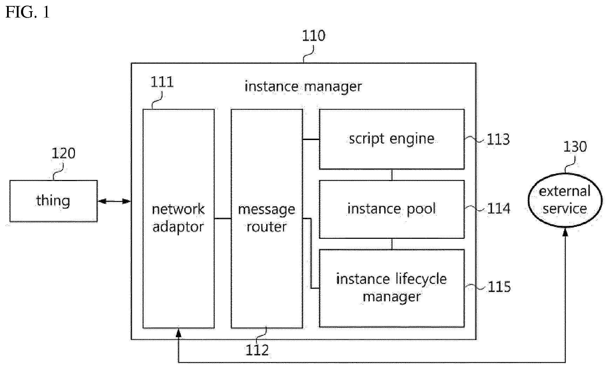

FIG. 1 is a block diagram illustrating a configuration of a service system including an instance manager according to an exemplary embodiment of the inventive concept. FIG. 1 illustrates an instance manager 110, a thing 120, and an external service 130.

The instance manager 110 may be an important component associated with generating and operating an instance for a virtual object (VO) corresponding to an Internet of thing (IoT) device which is the thing 120. The instance manager 110 may include a network adaptor 111 which communicates with the thing 120 or the external service 130, a message router 112 which routes an input and output message, a script engine 113 which provides an instance operation environment, an instance pool 114 which pools generated instances, and an instance lifecycle manager 115 which manages and schedules a lifecycle of an instance.

The instance manager 110 may be a system for hosting a virtualized object (hereinafter, referred to as a "virtual object (VO)") of an IoT device which the thing 120. The instance manager 110 may host a plurality of VOs. When a service associated with an IoT device is called from the IoT device and/or the external service 130, the instance manager 110 may provide a function of processing and managing this calling.

This instance manager 110 may include, as shown in FIG. 1, the network adaptor 111, the message router 112, the script engine 113, the instance pool 114, and the instance lifecycle manager 115.

The message router 112 may provide a function for routing a message received from the IoT device which is the object 120 and the external service 130 to an internal module on the instance manager 110. In this case, the message router 112 may record information about the thing 120 and the external service 130 which connect to an individual VO and may call a VO according to corresponding information upon receiving a message. Since the individual VO may have a plurality of interface information, the message router 112 may provide a function which may call an interface corresponding to the received message.

To improve performance of this message router 112, the message router 112 may include a function for filtering a data stream per interface. For example, the message router 112 may include a function for comparing values of a data stream received from an IoT device and transmitting the compared information with a message to the instance lifecycle manager 115 to filter a thing-based data stream according to interfaces of a VO which is individually registered.

For this, the message router 112 may filter, for example, raw-data by a predetermined stream-window size. The message router 112 may perform a predetermined filtering function according to settings of a VO, may describe a corresponding result value as a flag, and may call the instance lifecycle manager 115. This flag may have a value, such as "0" or "1", for indicating that data are changed or the same. Also, the settings of the VO may be information about whether to perform filtering, which is included in the VO, in consideration of a characteristic of a corresponding IoT device.

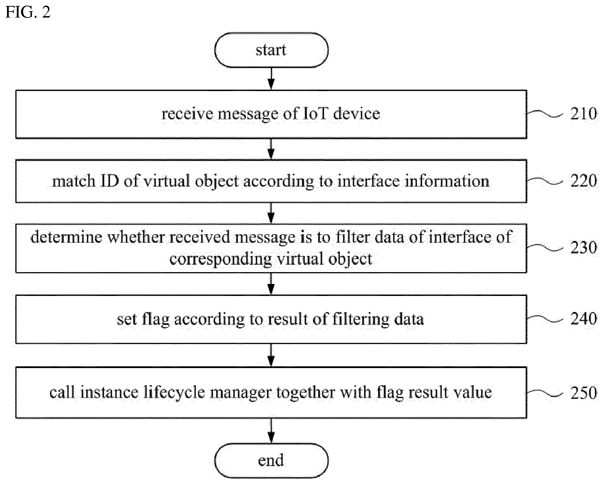

FIG. 2 is a flowchart illustrating a message routing process according to an exemplary embodiment of the inventive concept. This message routing process may be performed by a message router 112 described in FIG. 1. Referring to FIGS. 1 and 2, the message routing process may include steps 210 to 250 below.

In step 210, the message router 112 may receive a message of an IoT device. For example, the message of the IoT device may be transmitted to the message router 112 through the network adaptor 111 of FIG. 1.

In step 220, the message router 112 may match an identifier (ID) of a virtual object (VO) according to interface information. The message of the IoT device may include interface information such as an ID for an interface. The message router 112 may find a VO corresponding to the IoT device through interface information.

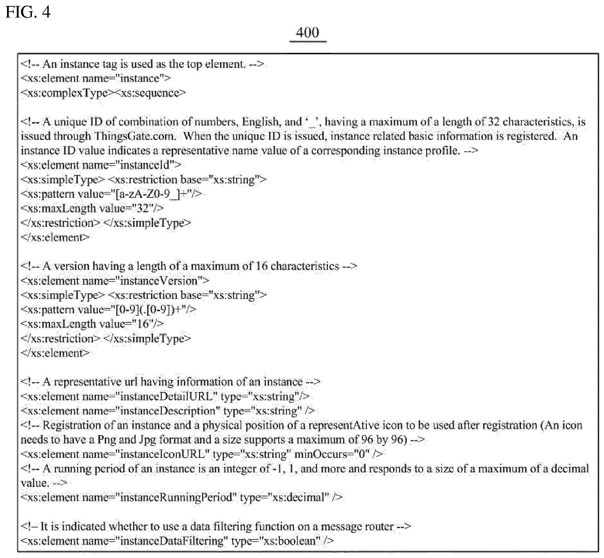

In step 230, the message router 112 may determine whether the received message is to filter data of an interface of a corresponding VO. The VO may include, as shown in FIG. 4 below, information about whether to filter data of a corresponding interface.

In step 240, the message router 112 may set a flag according to the result of filtering the data. As described above, the flag may have a value, such as "0" or "1 ", for indicating that data are changed or the same.

In step 250, the message router 112 may call the instance lifecycle manager 115 together with the set flag value. In other words, the result value filtered in step 240 may include information indicating whether data of a message are changed from previous data or are the same as the previous data. In this case, when the data are the same according to the filtered result value, the called instance lifecycle manager 115 may reuse an instance pooled in the instance pool 114 or may skip calling of an instance for the message of the IoT device.

Turning to FIG. 1, the instance lifecycle manager 115 may manager a call period of an instance per VO. For example, the instance lifecycle manager 115 may receive data from the message router 112, may call an instance of a VO, and may transmit a value of the received data. In this case, when there is no change between a value transmitted to a corresponding VO according to flag information and a previously transmitted value, the instance lifecycle manager 115 may determine whether to use a context of an instance pooled in the instance pool 114.

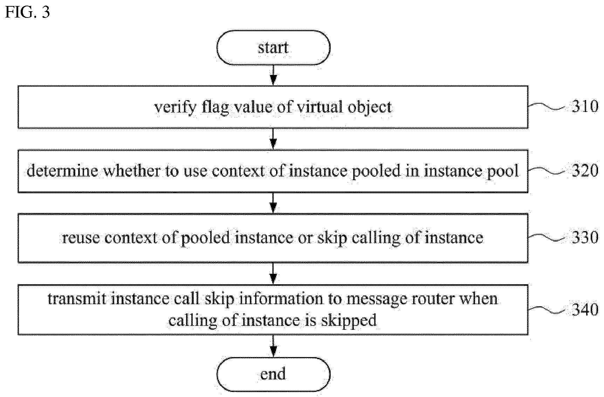

FIG. 3 is a flowchart illustrating a process of managing an instance call period per VO according to an exemplary embodiment of the inventive concept. This process of managing the instance call period per VO may be performed by the instance lifecycle manager 115 described in FIG. 1. Referring to FIGS. 1 to 3, the process of managing the instance call period per VO may include steps 310 to 340 below. In this case, step 310 may be performed after the instance lifecycle manager 115 is called in step 250 of FIG. 2.

In step 310, the instance lifecycle manager 115 may verify a flag value of a VO. For example, when the verified flag value is "0", the instance lifecycle manager 115 may recognize that data received from an IoT device are changed. When the verified flag value is "1 ", the instance lifecycle manager 115 may recognize that data received from the IoT device are the same.

In step 320, the instance lifecycle manager 115 may determine whether to use a context of an instance pooled in the instance pool 114.

In step 330, the instance lifecycle manager 115 may reuse a context of the pooled instance or may skip calling of an instance. For example, when the data received from the IoT device are the same in step 320, the instance lifecycle manager 115 may reuse a context of the pooled instance or may skip calling of an instance. When the data received from the IoT device are changed, the instance lifecycle manager 115 may proceed to call an instance.

In step 340, when the calling of the instance is skipped, the instance lifecycle manager 115 may transmit instance call skip information to the message router 112. In this case, the message router 112 may determine whether a corresponding VO subscribes to a feeder interface. When the corresponding VO subscribes to the feeder interface, the message router 112 may transmit the instance call skip message to the corresponding VO using the feeder interface of the corresponding VO.

As described above, in the related art, a code of a VO is compiled whenever an instance of the VO is loaded, and a code of a VO is continuously compiled through occurrence of frequent communication and frequent calling of the VO for processing the communication. On the other hand, in exemplary embodiments of the inventive concept, the message router 112 may determine whether to filter data of an interface of a VO. The instance lifecycle manager 115 may skip unnecessary calling of an instance or may reuse an instance previously pooled in the instance pool 114, thereby making it possible to considerably reduce the number of times a code is compiled.

In this case, the VO may include information about whether to filter information generated from the IoT device on the message router 112 in consideration of a characteristic of the IoT device. FIG. 4 is a drawing illustrating information including a VO according to an exemplary embodiment of the inventive concept. The last line indicates that Information 400 may include information about whether to perform "instanceDataFiltering" in a "boolean" manner using "1" and "0" indicating that a VO is true and false.

As described above, the instance manager 110 according to exemplary embodiments of the inventive concept may be included in an instance hosting gateway which will be described below.

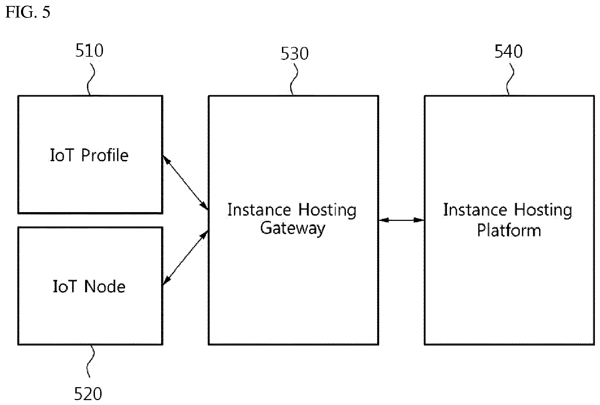

FIG. 5 is a block diagram illustrating a configuration of an entire system for instance hosting according to an exemplary embodiment of the inventive concept. FIG. 5 illustrates an Internet of Things (IoT) profile 510, an IoT node 520, an instance hosting gateway 530, and an instance hosting platform 540.

The IoT profile 510 may refer to information on the IoT node 520 which is provided online from a manufacturer or a developer of the IoT node 520 which is an IoT device. For example, this IoT profile 510 may refer to an extensible markup language (XML) file which is generated when the manufacturer or the developer processes information on the IoT node 520 according to a predefined XML scheme to minimize inconvenience in which a user has to manually input data to the instance hosting gateway 530.

This IoT profile 510 may include a description about the IoT node 520 and an identifier (ID) (e.g., a uniform resource locator (URL) of a document including information on a process) of a process in which an operation of the IoT node 520 is described. For example, a process may be provided online using a separate file (e.g., extension 'js' file) and an ID about the process may be a URL indicating a location of this file. The following Table 1 shows an example of information which may be included in the IoT profile 510.

**[Table 1]**

| Name | Description | Note |
|---|---|---|
| IoTProfileID | A unique URL in which an IoT profile is located | |
| IoTProfileVer | A version of an IoT profile | Expressed in a form of 'V' + 'number' |
| IoTProfileDesc | A description of an IoT profile | |
| IoTInput | An input value of an IoT node (not required for an instance node which does not provide an input function), and information used to generate RESTful API | JSON-XML |
| IoTOutput | An output value of an IoT node and information used to generate RESTFUL API | |
| IoTProcessID | A process ID of an IoT node | Expressed in a URI format |

The IoT node 520 may correspond to a thing in an IoT environment, such as a sensor device, and may provide ID information of the IoT node 520, such as 'IoTNodeID'. When the IoT node 520 is a non-constraint (NC) node such as a smart device, it may directly provide the IoT profile 510.

For clarity of description, FIG. 5 illustrates the single IoT node 520 and the single IoT profile 510 about the IoT node 520. However, a plurality of IoT nodes and a plurality of IoT profiles about the plurality of IoT nodes may be used in an IoT environment. Also, a plurality of IoT profiles may be provided with respect to a single IoT node.

A single IoT node and an instance corresponding to a virtual object (VO) may be provided in various forms, such as 1:1, 1:N, N:1, and N:M. Also, an instance may correspond to a VO which may exist in a form of a process regardless of an absence of a physical IoT node, and may be generated and linked through linkage between processes, instead of being linked to a specific device such as a mashup process. For example, even though an instance is not connected to a separate IoT node, an instance may be generated in the instance hosting gateway 530 by deploying and executing a specific process in the instance hosting gateway 530. In the present specification, there is described an exemplary embodiment of the inventive concept in which a message received an IoT node through communication between the IoT node (e.g., a physical node) described as a physical device and the instance hosting gateway according to exemplary embodiments of the inventive concept is connected and processed with an individual instance. However, as described above, at least one IoT node may be present in a form of a process (e.g., a process node), rather than a physical device.

Further, a process of receiving information from a plurality of sensors without a physical device, such as a sensor device or an actuator, and providing only a linkage function with another web service or application online may be provided. For example, in case of a service which provides a specific result by analyzing information of sensors or state information of a specific application used by a social service or a user, there is a need for a separate processing environment to operate the corresponding service. In this case, an instance hosting gateway according to exemplary embodiments of the inventive concept may provide the processing environment.

The instance hosting gateway 530 may process a message received from the IoT node 520 by connecting the message with an individual instance, and may interact with an external service according to a request of a user or a service. This instance hosting gateway 530 may be mounted on an access point (AP) environment for the IoT node 520. For example, the instance hosting gateway 530 may include an instance application server portion which is mounted on an AP and operates as a web application server (WAS) and a portion which is mounted on an AP in a form of software, hardware, or a combination of software and hardware (e.g., a module mounted with software on an operating system (OS) of the AP and a module mounted with hardware for communication with the IoT node 520).

For example, the instance hosting gateway 530 may be included in an AP installed in a specific space (e.g., a house), and may perform a function for communicating with things (e.g., IoT nodes) included in the specific space, receiving and processing data, and providing a linkage service with an external service.

In this case, when the new IoT node 520 is found, the instance hosting gateway 530 may download and install the IoT profile 510. For example, a user may input a location of an XML file corresponding to the IoT profile 510 to the instance hosting gateway 530, and the instance hosting gateway 530 may download and install the XML file according to the input location.

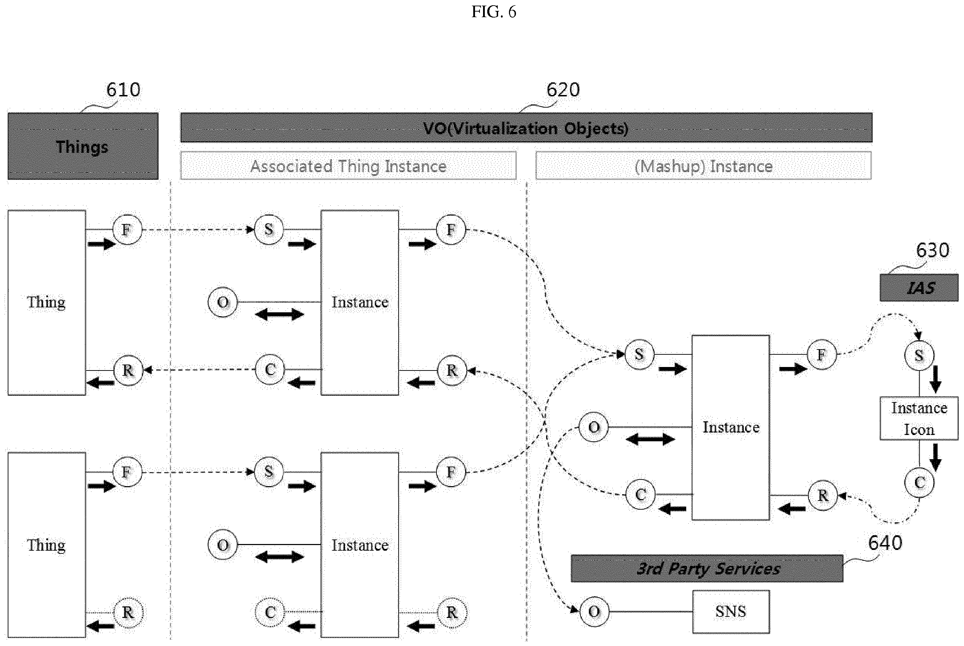

This instance hosting gateway 530 is described in more detail with reference to FIGS. 6 through 8.

The instance hosting platform 540 may provide a linkage function between instances and a mashup function. For example, the instance hosting gateway 530 may provide a function to be provided according to a request of a user or a service to the outside in an API format and may communicate with the instance hosting platform 540 to interact with an external service.

FIG. 6 is a drawing illustrating the concept of interfaces of an instance according to an exemplary embodiment of the inventive concept. In virtualization objects 620 of things 610, there is a need for a basic interface necessary for connection between a virtualization object and a thing and for connection between a virtualization object and another virtualization object. In an exemplary embodiment of the inventive concept, a description will be given of examples of providing a total of 5 interface functions for instance to effectively and explicitly use an interface.

Information of an individual instance may be explicitly described in an instance profile according to each instance to be used. An instance manager (e.g., an instance manager 110 of FIG. 1) which may be included in an instance hosting gateway 530 of FIG. 5 may provide an associated function according to information of a corresponding instance. In this case, FIG. 6 illustrates each of the things 610, associated thing instances, and a mashup instance for linkage between instances. In this case, the mashup instance may facilitate linkage between an instance application server (IAS) 630 and a 3^{rd} party service 640.

The IAS 630 may be responsible for a web application server function of the instance hosting gateway 530. In this case, functions provided through the IAS 630 may be provided to a web interface. Also, the 3^{rd} party service 640 may refer to various external services (e.g., an external service 130 of FIG. 1) such as social network services (SNSs) associated with users.

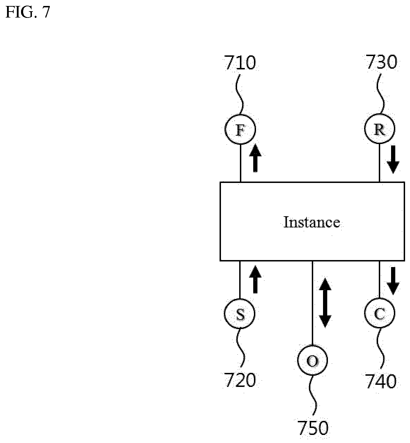

FIG. 7 is a drawing illustrating functions for interfaces of an instance according to an exemplary embodiment of the inventive concept. Instances which are virtualization objects 620 of FIG. 6 may transmit and receive data between (1) a thing and an instance, between (2) an instance and an instance, between (3) an external service (e.g., a 3^{rd} party service 640) and an instance, between (4) an instance hosting application function (e.g., an instance icon of FIG. 6) and an instance, using 5 interfaces previously provided from an instance manager.

An F 710 denoting a feeder may include an interface which exposes information an instance wants to provide to an instance or an external service. In this case, the F 710 may operate in a way of storing information to be fed on a message queue of an instance, rather than directly transmitting a message. The F 710 may be used in the following cases (1) to (3).

The case (1) where a message received from a device (thing) is read and the read message is transmitted to another service or another instance.

The case (2) where a specific state value is exposed in an instance or a value to be transmitted to an external service (e.g., a 3^{rd} party service 640 of FIG. 6) is exposed.

The case (3) where a value (hereinafter, referred to as a representative attribute value) to be representatively exposed to users through an instance icon (e.g., an instance icon of an IAS 630 of FIG. 6) on an instance list among state values of instances is set.

S 720 denoting a subscriber may include an interface which receives information from a feeder of a thing or another interface. The S 720 may be used in the following cases (4) and (5).

The case (4) where information received from a device (thing) is used to be transmitted (In this case, information about a physical interface of a thing, to which a network adaptor (e.g., a network adaptor 111 of FIG. 1) which is included in an instance hosting gateway 530 of FIG. 5 will listen, may be described in an associatedThingInformation element).

The case (5) where information about a feeder of another instance is subscribed to (e.g., a case where a value exposed to a feeder interface of another instance is used) - when information about a feeder of another instance is subscribed to, information may be subscribed to through an interface suitable for a condition defined in a filter.

R 730 denoting a receiver may include an interface through which an instance receives a message from a controller of another interface. The R 730 may be used in the following cases (6) to (8).

The case (6) where information is received from another interface (e.g., a case where information is received from a controller interface of another instance).

The case (7) where a representative control value on an instance icon is received (e.g., a case where a representative attribute value is set on a feeder) (e.g., a case where direct control of a user is processed).

The case (8) where a message is received from an external service (e.g., the 3^{rd} party service 640) (e.g., a case where user state information of a calendar service is received).

C 740 denoting a controller may include an interface though which an instance receives information from the outside. The C 740 may be used in the following cases (9) and (10).

The case (9) where a (control) message is transmitted to a device (thing) (e.g., a case where a message is transmitted to a device (thing) in which an associated thing information element is set).

The case (10) where a message is transmitted to another instance (e.g., a case where data are transmitted in a triggering manner, rather than a manner of inputting data to a receiver interface message queue of another instance).

O 750 denoting an open standard for authorization (OAuth) may include an interface through which an instance interacts with a 3^{rd} party service. The O 750 may be used in cases (11) and (12).

The case (11) where a message is transmitted to a 3^{rd} party service (after OAuth authentication is achieved).

The case (12) where a 3^{rd} party service receives (inquires) a message.

Herein, the above-described cases (8) to (12) indicate that the message is received from the external service. The message from the external service may be received through a receiver and may also be received through the O 750 according to exemplary embodiments of the inventive concept.

An instance according to exemplary embodiments of the inventive concept may generate each message queue for individual interface information. A message queue per interface may store the predetermined number of message (e.g., 100 messages). Although a corresponding instance is abnormally ended (e.g., when a state of the instance is changed to an error state), when there is a stored message, the instance may use the stored message when the state of the instance is changed to a normal running state again. In this case, messages received when the instance is in the error state may be stored on a message queue of an individual interface (e.g., a subscriber interface or a receiver interface), irrespective of a state of the instance.

Hereinafter, a description is given in more detail for interfaces which are included in an instance.
1. As described above, the subscriber may be an interface through which an instance receives and subscribes to a message from a feeder interface of a thing or another instance. When a message is received from a thing, the corresponding subscriber needs to describe information of a physical interface, necessary for receiving the message, on a corresponding 'associatedThingInformation' element. Herein, the necessary information may include information for adapting a physical interface of a basic device. Also, when a message is received from another interface, the corresponding subscriber needs to describe information, about a feeder interface of another interface to be subscribed to, on a filter element. The information about the feeder interface may be described on a filter element by inputting information of an instance to be subscribed to in a process (e.g., registration using an instance wizard) of registering a corresponding instance. In this case, when a trigger attribute is set to 'true', if a value of a corresponding feeder is generated, an instance manager may immediately call a subscriber instance which subscribes to the instance. The corresponding operation may be performed irrespective of an 'InstanceRunningPeriod' value.
An attribute a subscriber may have may be expressed as the following example of Table 2 below.

**[Table 2]**

| |
|---|
| ```
 <xs:element name="subscriber"> <xs:complexType>
 <!- It is used as an identifier for identifying an interface (I/F) according to
 each interface. A digit may be used to a maximum of a three-digit number. -- 
 >
 <xs:attribute name="id" type="xs:unsignedShort" />
 <!-NAME may be used as information for easily classifying I/Fs, and may
 be used as information provided to users to classify I/Fs of a corresponding
 instance upon connection between instances later. -->
 <xs:attribute name="name" type="xs:string" />
 <!- When a corresponding value is generated upon subscribing to another
 instance, after immediately performing monitoring about whether to perform
 setting according to whether a response occurs and about whether an
 instance manager performs triggering setting of a feeder list, data are
 immediately transmitted -->
 <xs:attribute name="trigger" type="xs:boolean" />
 </xs:complexType> </xs:element>
``` |

Also, an attribute a filter in a subscriber may have may be expresses as the following example of Table 3 below.

**[Table 3]**

| |
|---|
| ```
 <xs:element name="filter"> <xs:complexType>
 <!- When a feeder of another instance is subscribed to, only an interface
 suitable for a condition defined in a filter may be subscribed to -->
 <xs:attribute name="instanceld" type="xs:string"/>
 <!- An ID value (unique value) of an instance to be subscribed to is input. -- 
 >
 <xs:attribute name="feederld" type="xs:unsignedShort"/>
 <!- A unique ID of a feeder in an instance to be subscribed to is input. -->
 <xs:attribute name="miniVersion" type="xs:string"/>
 <!- A minimum value of a supporting version of an instance to be
 subscribed to is input. -->
 <xs:attribute name="maxVersion" type="xs:string"/>
 <!- A maximum value of a supporting version of an instance to be
 subscribed to is input. -->
 </xs:complexType> </xs:element>
 </xs:sequence>
``` |

2. A feeder may be an interface through an instance exposes information to another instance. A value may be immediately transmitted or a value may be transmitted as an input value of another instance in an operation of the other instance, according to setting of an interface which is subscribed to. In this case, a message queue may be generated on an instance manager according to an individual feeder ID, and data (messages) are stored in the message queue and the stored data are read through a subscriber interface.
In connection with a method of transmitting a message of a feeder, a method of reading a message from the feeder may be classified as a method according to whether to set a trigger on a subscriber interface or a method of being transmitted as an input value according to execution of an instance which is subscribed to.
In case of a subscriber interface which sets a trigger to the corresponding feeder, when a value for a feeder to which the corresponding subscriber interface subscribes is registered, the registered value may be called. Otherwise, upon executing another instance in which an instance manager subscribes to the corresponding feeder, data are read and the read data are transmitted as an input value. In this case, although the instance manager reads a value of the corresponding feeder, data are not immediately deleted from a message queue. A size of a queue of a corresponding message may have the predetermined number of messages (e.g., 100 messages) according to each interface. Although a corresponding instance is abnormally ended, a corresponding value remains.
A feeder may use attributes expressed in Table 4 below. When a 'representative' indicating a representative value is used (true), units, such as temperature and Kcal, which interact with corresponding data may be displayed on a list page of an instance manager only when units are specified.

**[Table 4]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. -->
 <xs:attribute name="name" type="xs:string" />
 <!-NAME may be used as information for easily classifying I/Fs, and may
 be used as information provided to users to classify I/Fs of a corresponding
 instance upon connection between instances later. -->
 <xs:attribute name="unit" type="xs:string" />
 <!- It is used to define a data value transmitted and received through a
 corresponding interface. -->
 <xs:attribute name="representative" type="xs:boolean" />
 <!- When a corresponding value is set to a portion for setting a
 representative value, the corresponding value is output to an instance icon
 on an instance list page. -->
``` |

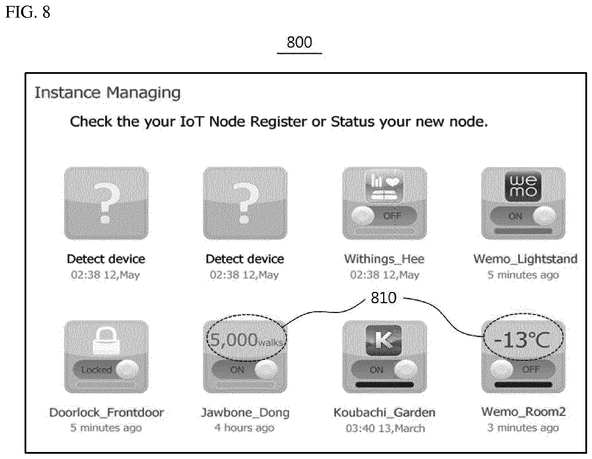

FIG. 8 is a drawing illustrating an instance list page according to an exemplary embodiment of the inventive concept. FIG. 8 illustrates a screen 800 on which a part of a page including a plurality of instance icons is displayed. In this case, in the screen 800, examples in which a representative value attribute of a feeder instance is set to instance icons may be displayed through dotted ovals 810.
3. A receiver may be an interface in which a message is called from another instance, and may receive information through a controller interface of the other instance. A message transmitted from the other instance may be directly transmitted to an instance. Triggering (execution) of a corresponding instance may occur. This triggering may be performed irrespective of setting of 'runningPeriod' indicating a running period of the instance which receives the message.
A receiver may use attributes indicated in Table 5 below. When a 'representative' indicating a representative value is used (true), a button for controlling a corresponding instance may be generated on a list page of an instance manager only when units are specified.

**[Table 5]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. -->
 <xs:attribute name="name" type="xs:string" />
 <!-NAME may be used as information for easily classifying I/Fs, and may
 be used as information provided to users to classify I/Fs of a corresponding
 instance upon connection between instances later. -->
 <xs:attribute name="unit" type="xs:string" />
 <!- It is used to define a data value transmitted and received through a
 corresponding interface. -->
 <xs:attribute name="representative" type="xs:boolean" />
 <!- When a corresponding value is set to a portion for setting a
 representative value, the corresponding value is output to an instance icon
 on an instance list page. -->
``` |

Turning to FIG. 8, FIG. 8 illustrates that buttons, such as "ON", "OFF", and "Locked", for controlling an instance corresponding to an instance icon are generated on icons activated among icons displayed on the screen 800.
4. A controller may include an interface through which an instance transmits a message to another instance or a device (thing). The controller may call a corresponding instance through a direct transmission method to transmit a message to another instance. The message may be transmitted to a corresponding instance through a receiver interface. For example, transmission of a message may be triggered irrespective of setting of 'runningPeriod' of an instance which receives the message. When a message is transmitted to a device (thing), the controller may immediately transmit the message through a network adaptor.
When a message is transmitted to another instance, information of a receiver interface of the other instance needs to be described in a filter element. In this case, the information described in the filter element may be expressed in Table 6 below.

**[Table 6]**

| |
|---|
| ```
 <xs:element name="filter"> <xs:complexType>
 <!- When a message is transmitted to a receiver of another instance, the
 message may be transmitted to only an interface suitable for a condition
 defined in a filter. -->
 <xs:attribute name="instanceld" type="xs:string"/>
 <!- An ID value (unique value) of an instance to transmit a message -->
 <xs:attribute name="receiverld" type="xs:unsignedShort"/>
 <!- A ID value (unique value) of a receiver interface in an instance to
 transmit a message -->
 <xs:attribute name="miniVersion" type="xs:string"/>
 <!- A minimum value of a supporting version of an instance to transmit a
 message is input. -->
 <xs:attribute name="maxVersion" type="xs:string"/>
 <!- A maximum value of a supporting version of an instance to transmit a
 message is input. -->
 </xs:complexType> </xs:element>
``` |

Also, the controller may have attributes in Table 7 below.

**[Table 7]**

| |
|---|
| ```
 <xs:attribute name="id" type="xs:unsignedShort" />
 <!- It may be used as an identifier for identifying an interface (I/F) according
 to each interface. A digit may be used to a maximum of a three-digit
 number. -->
 <xs:attribute name="name" type="xs:string" />
 <!-NAME may be used as information for easily classifying IFs, and may be
 used as information provided to users to classify I/Fs of a corresponding
 instance upon connection between instances later. -->
 <xs:complexType> </xs:element>
``` |

5. An open standard for authorization (OAuth) interface may include an interface used when an instance interacts with an external 3^{rd} party service through OAuth-based authentication. For this, a user needs to first perform OAuth account authentication of a service to which he or she want to connect. This OAuth account authentication may be separately performed through an instance wizard or an OAuth menu.

Authentication information of OAuth for linkage may be set or setting of the authentication information may be cancelled, according to individual instances. For example, a plurality of SNS accounts may be differently set or cancelled according to each instance.

An instance may determine whether it is essential to perform corresponding OAuth linkage according to necessity of OAuth. Corresponding information may be indicated through a 'required' attribute. When the 'required' attribute is set to 'true', if OAuth linkage is not normally performed, a corresponding instance may not be in a running state. After registration, an instance remains in an error state.

The OAuth interface may have attributes in Table 8 below.

**[Table 8]**

| |
|---|
| ```
 <xs:element name="oAuth"> <"xs:complexType>
 <!- It may be used as an identifier for identifying an interface (I/F) according
 to each interface. A digit may be used to a maximum of a three-digit
 number. -->
 <xs:attribute name="id" type="xs:unsignedShort" />
 <!- A name of a service to perform OAuth linkage is described. For
 example, Twitter is input like 'twitter', Facebook is input like 'facebook', and
 Google is input like 'Google'. -->
 <xs:attribute name="serviceName" type="xs:string" />
 <!- A description for informing users about information to be used in an
 OAuth account to perform linkage is given. For example, information about
 whether to access any information for any purpose is described. -->
 <xs:attribute name="description" type="xs:boolean" />
 <xs:complexType> </xs:element>
``` |

Hereinafter, a description will be given of a data type of an instance supported by a system for instance hosting. A data type of an instance may be used to indicate a unit display sign displayed on an instance icon in addition to clarity of processing according to a data type when a message is transmitted between instances.

A data type of an instance may refer to a data type of unit information provided according to interfaces of the instance. The system for instance hosting may provide a basic data type (e.g., a world wide web consortium (W3C) web interface definition language (WebIDL) standard) to provide ease of development and to use user intuitive information, and may separately provide a data set frequently used when general IoT devices are used. For example, a data type may be provided in Table 9 below.

**[Table 9]**

| Data Type | Description | Icon Display |
|---|---|---|
| percent | Percentage | % |
| onoff | On/off | Control Icon |
| celsius | Celsius | °C |
| lockunlock | Lock/unlock | Control Icon |
| lux | Practical unit of illuminance | Lux |
| kcal | A unit of calorie | Kcal |
| Cal | A unit of calorie | Cal |
| steps | step | Steps |
| floor | floor | F |
| kilogram | A unit of mass | KG |
| gram | A unit of mass | G |
| hour | A unit of time | H |
| minute | A unit of time | Min |

In addition to examples of Table 9, various data types, such as millimeter (mm), for indicating rainfall and the like may be used.

In instance hosting, when a virtual object of a thing and business logic is generated, a schema structure for collecting essential information may be proposed. Important structures may include an instance information recording portion, a description portion of network adaptor information for interacting with a virtual object when a thing is generated as the virtual object, a description portion of interface information defined according to instances, and a JavaScript (JS) code description portion. Contents of the structures may be provided in Table 10 below.

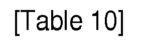

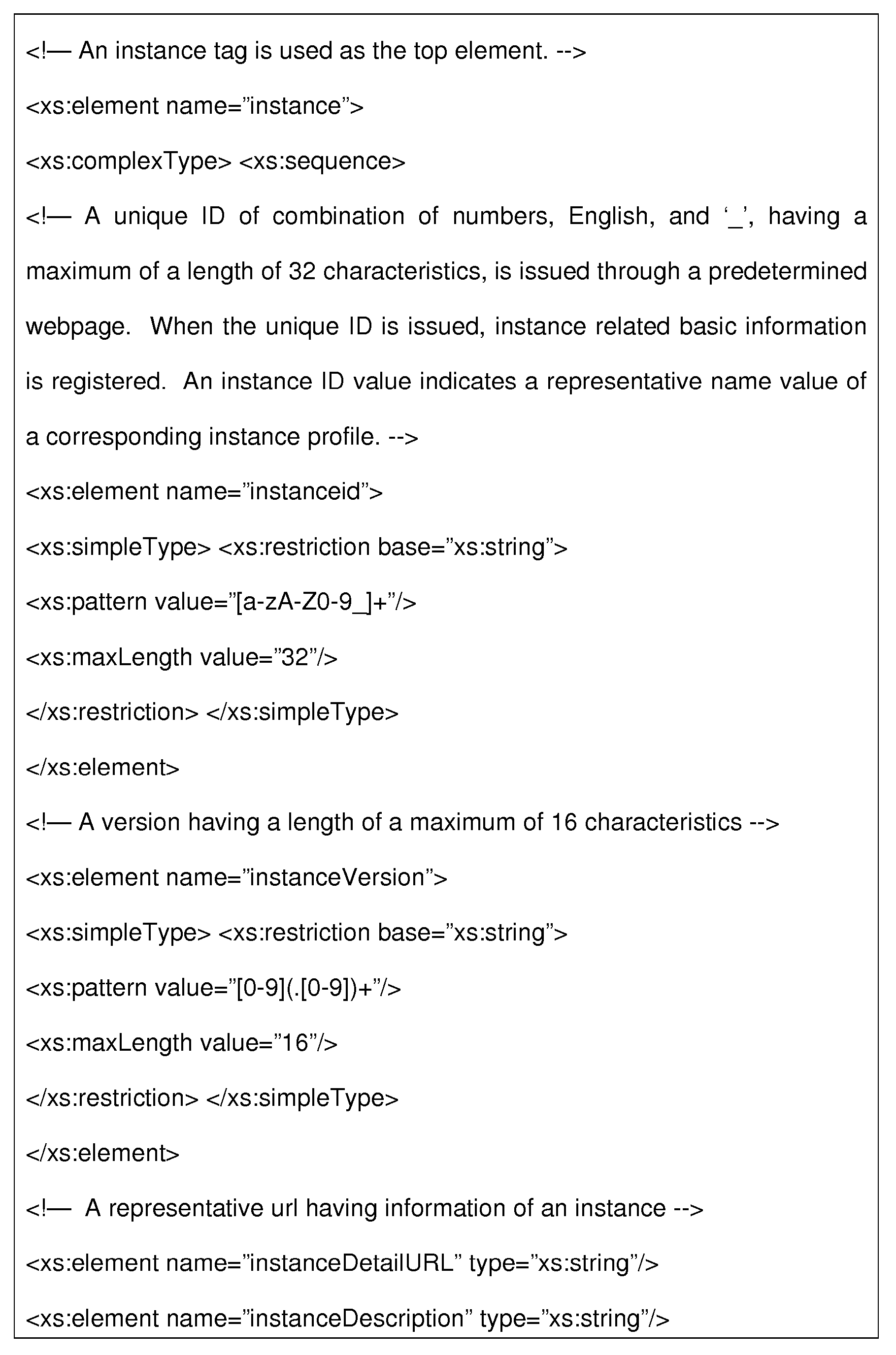

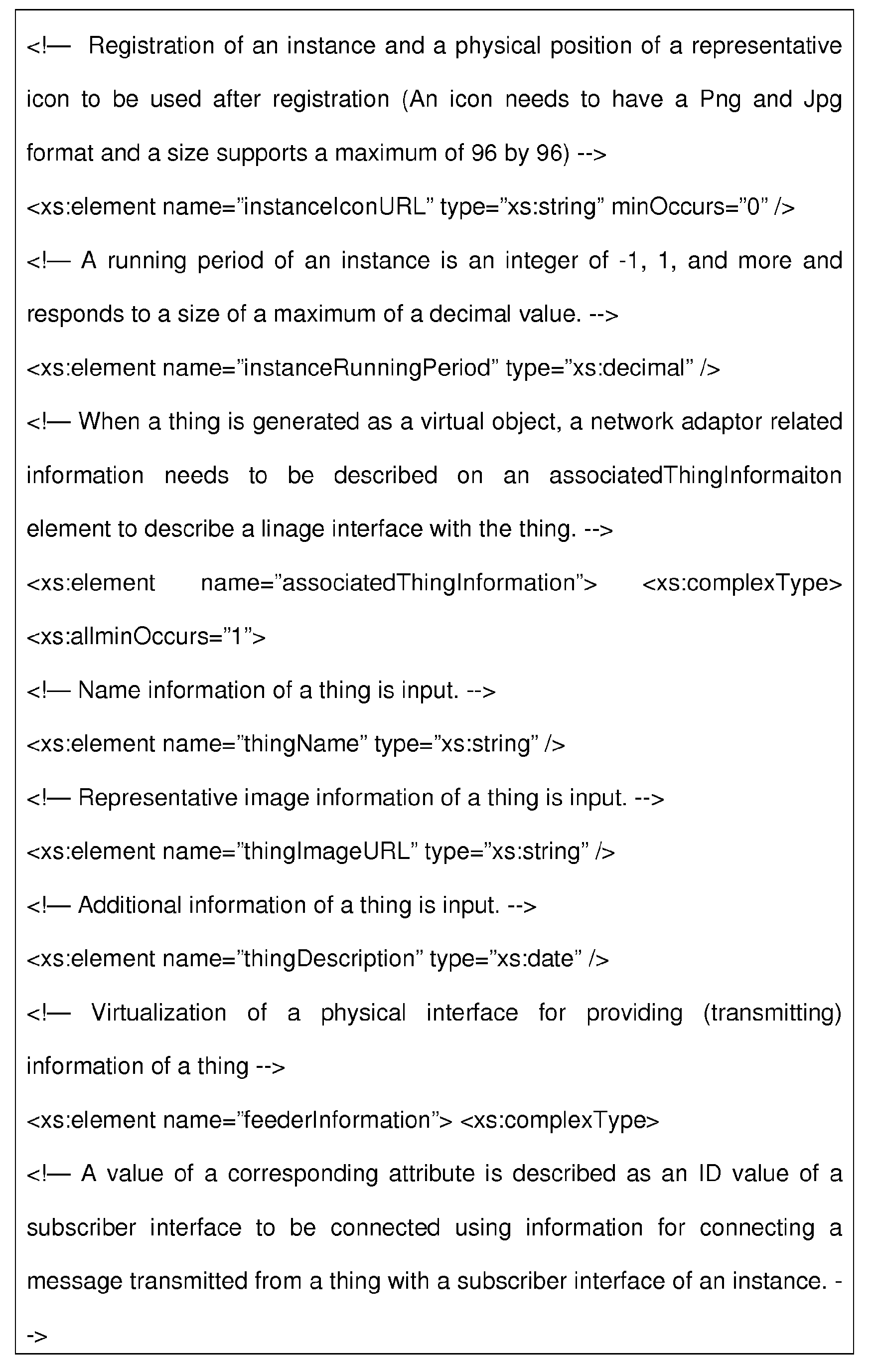

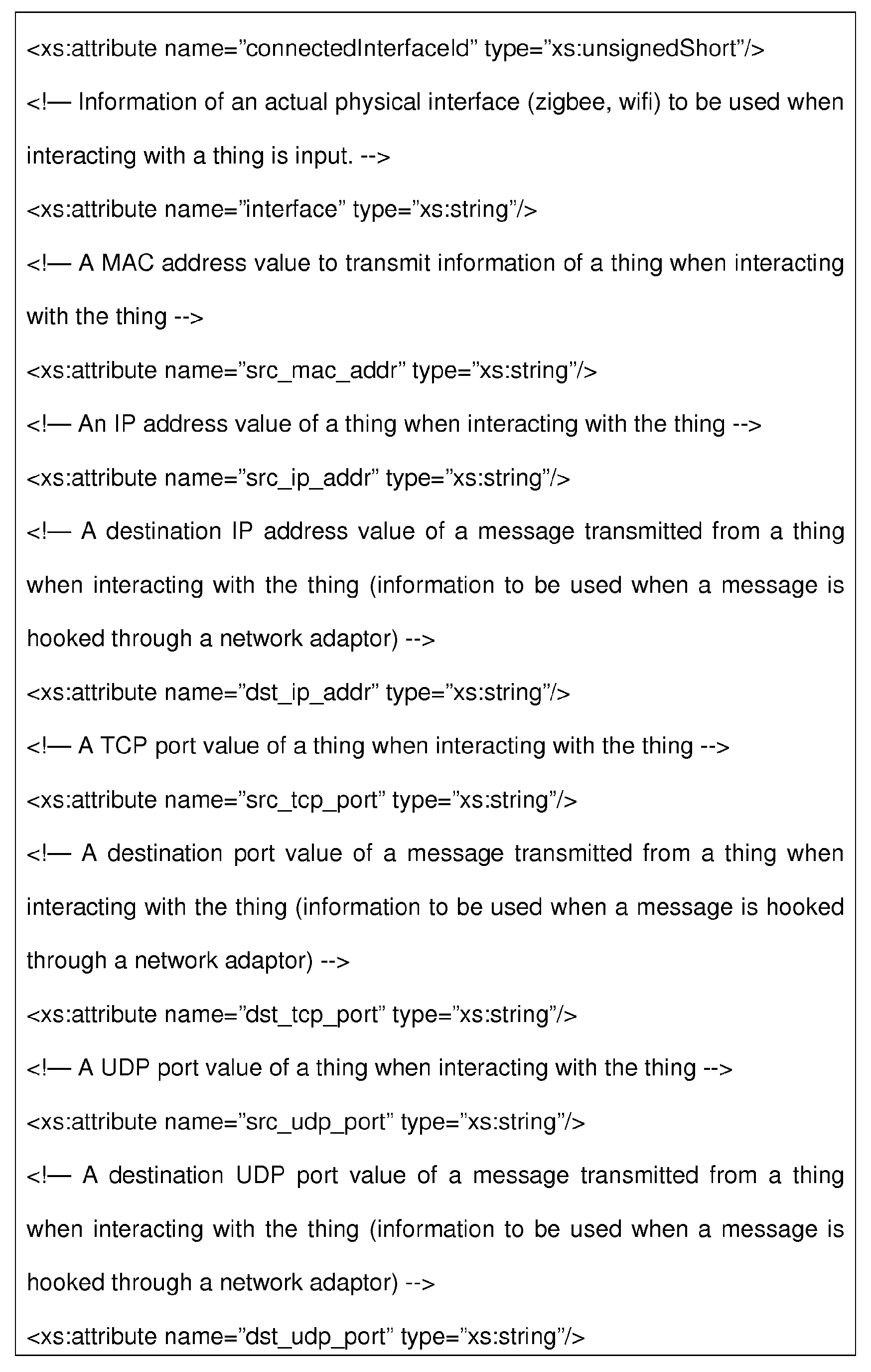

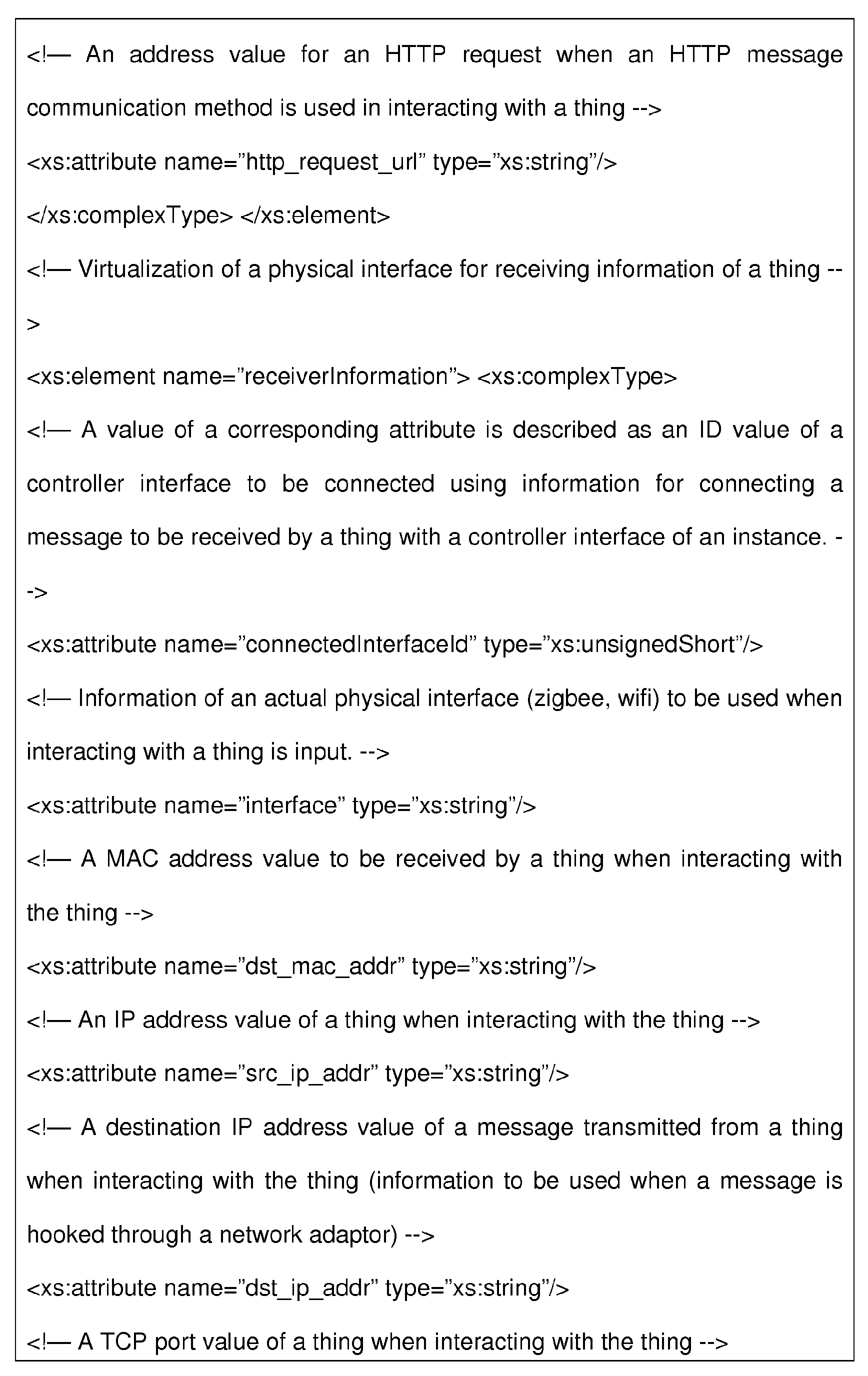

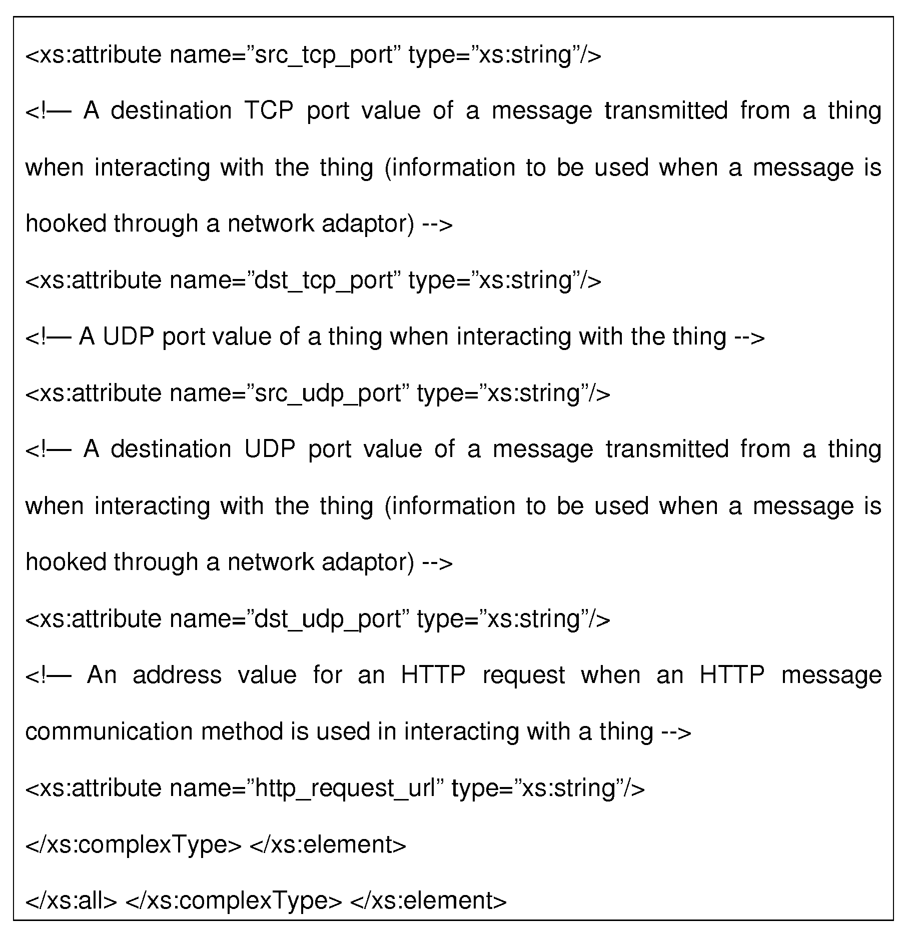

The above-described instance manager may use, for example, a V8-based Java script engine (e.g., a script engine 13 of FIG. 1) as a running environment for providing a running environment of a virtualization object.

As such, according to exemplary embodiments of the inventive concept, the message router may determine whether to filter data of an interface of a virtual object, and the instance lifecycle manager may skip unnecessary calling of an instance according to a flag transmitted from the message router or may reuse an instance previously pooled in an instance pool, thereby making it possible to reduce the number of times a code is compiled and to improve performance.

The above-described devices (e.g., the service system and the IoT) may be realized by hardware elements, software elements and/or combinations thereof. For example, the devices and components illustrated in exemplary embodiments of the inventive concept may be implemented in one or more general-use computers or special-purpose computers, such as a processor, a controller, an arithmetic logic unit (ALU), a digital signal processor, a microcomputer, a field programmable array (FPA), a programmable logic unit (PLU), a microprocessor or any device which may execute instructions and respond. A processing unit may implement an operating system (OS) or one or software applications running on the OS. Further, the processing unit may access, store, manipulate, process and generate data in response to execution of software. It will be understood by those skilled in the art that although a single processing unit may be illustrated for convenience of understanding, the processing unit may include a plurality of processing elements and/or a plurality of types of processing elements. For example, the processing unit may include a plurality of processors or one processor and one controller. Alternatively, the processing unit may have a different processing configuration, such as a parallel processor.

Software may include computer programs, codes, instructions or one or more combinations thereof and may configure a processing unit to operate in a desired manner or independently or collectively control the processing unit. Software and/or data may be permanently or temporarily embodied in any type of machine, components, physical equipment, virtual equipment, computer storage media or units or transmitted signal waves to be interpreted by the processing unit or to provide instructions or data to the processing unit. Software may be dispersed throughout computer systems connected via networks and be stored or executed in a dispersion manner. Software and data may be recorded in one or more computer-readable storage media.

The methods according to the above-described exemplary embodiments of the inventive concept may be recorded in computer-readable media including program instructions to implement various operations embodied by a computer. The media may also include, alone or in combination with the program instructions, data files, data structures, and the like. The program instructions recorded in the media may be designed and configured specially for the exemplary embodiments of the inventive concept or be known and available to those skilled in computer software. Computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Program instructions include both machine code, such as produced by a compiler, and files containing higher level code that may be executed by the computer using an interpreter. The described hardware devices may be configured to act as one or more software modules to perform the operations of the above-described exemplary embodiments of the inventive concept, or vice versa.

While a few exemplary embodiments have been shown and described with reference to the accompanying drawings, it will be apparent to those skilled in the art that various modifications and variations can be made from the foregoing descriptions. For example, adequate effects may be achieved even if the foregoing processes and methods are carried out in different order than described above, and/or the aforementioned elements, such as systems, structures, devices, or circuits, are combined or coupled in different forms and modes than as described above or be substituted or switched with other components or equivalents.

Therefore, other implements, other embodiments, and equivalents to claims are within the scope of the following claims.

## Claims

1. A service system in an Internet of things, IoT, environment, comprising:
an instance manager (110) configured to manage generation and operation of an instance for a virtual object corresponding to an IoT device,
wherein the instance manager (110) comprises:
an instance pool (114) configured to pool the instance;
a message router (112) configured to filter a data stream according to the instance and to transmit a filtered result value together with the data stream;
an instance lifecycle manager (115) configured to reuse the instance pooled in the instance pool (114) according to the filtered result value or to skip calling of an instance according to the filtered result value wherein the virtual object, VO, comprises information indicating whether to perform filtering on the message router according to a characteristic of the corresponding IoT device,
wherein the message router (112) is configured to determine whether data of an interface of the virtual object are to be filtered, according to the information included in the virtual object and
wherein when the data of the interface of the virtual object are to be filtered, the message router (112) is configured to filter the data stream,
whereby the message router (112) is configured to determine whether to filter data of the interface of the virtual object and the instance lifecycle manager is configured to skip unnecessary calling of the instance according to a flag transmitted from the message router or to reuse the instance previously pooled in the instance pool according to the flag.

2. The service system of claim 1, wherein the message router (112) compares raw-data by a predetermined stream-window size, generates flag information indicating a change or a no-change of the raw-data according to the result of the comparison, and transmits the generated flag information together with the data stream to the instance lifecycle manager (115).

3. The service system of claim 2, wherein the flag information comprises information indicating one of a change and a no-change of data of the data stream.

4. The service system of claim 1, wherein the filtered result value comprises information about one of a change and a no-change of data of the data stream, and
wherein when the data are the same according to the filtered result value, the instance lifecycle manager (115) reuses the instance pooled in the instance pool or skips calling of an instance for a message of the IoT device.

5. A performance improvement method in an Internet of things, IoT, environment, comprising:
receiving a message of an IoT device, by a message router (112) of an instance manager (110) configured to be included in a service system and to manage generation and operation of an instance for a virtual object, VO, corresponding to the IoT device;
filtering data of the message, by the message router (112); and
calling an instance lifecycle manager (115) of the instance manager (110) together with a
result value of filtering the data, by the message router (112)
wherein the virtual object corresponding to the IoT device comprises information indicating whether to perform filtering on the message router (112) according to a characteristic of the IoT device,
further comprising:
matching an identifier of the virtual object according to interface information, by the message router; and
determining whether the received message is to be filtered for an interface of the virtual object by the message router (112),
determining whether to filter data of the interface of the virtual object at the message router, and skipping unnecessary calling of the instance according to a flag transmitted from the message router or reusing the instance previously pooled in an instance pool according to the flag at the instance lifecycle manager.

6. The performance improvement method of claim 5, wherein the result value of filtering the data comprises information indicating the data of the message are changed from previous data or are the same as the previous data, and
wherein when the data are the same as the previous data according to the result value of filtering the data, the instance lifecycle manager (115) reuses an instance pooled in an instance pool (114) or skips calling of an instance for the message.

7. The performance improvement method of claim 5, wherein the result value of filtering the data comprises flag information indicating whether the data of the message are changed from previous data or are the same as the previous data, and
wherein the calling of the instance lifecycle manager (115) comprises:
transmitting the message together with the flag information to the instance lifecycle manager (115).

8. A performance improvement method in an Internet of things, IoT, environment, comprising:
verifying a flag value of a virtual object, VO, according to calling from a message router of an instance manager (110) included in a service system, by an instance lifecycle manager (115) of the instance manager;
reusing an instance pooled in an instance pool (114) of the instance manager according to the flag value the or skip calling of an instance according to the flag value, by the instance lifecycle manager (115), and
when the calling of the instance is skipped, transmitting an instance call skip information to the message router (112),
wherein the instance call skip information is transmitted to the virtual object through a feeder interface of the virtual object corresponding to a message received by the message router (112).

9. The performance improvement method of claim 8, wherein the flag value comprises information which is a result value of filtering a message of an IoT device after the message router (112) receives the message of the IoT device and indicates whether data of the message are changed from previous data or are the same as the previous data.

10. The performance improvement method of claim 8, wherein the reusing of the instance or the skipping of the instance comprises:
when it is determined that data included in a message of an IoT device are the same as previous data according to the flag value, reusing the instance pooled in the instance pool or skipping the calling of the instance; and
when the data included in the message are changed from the previous data, calling the corresponding instance.

## Patentansprüche

1. Servicesystem in einer Internet der Dinge, IoT, -Umgebung, umfassend:
einen Instanzenmanager (110), welcher dafür konfiguriert ist, die Erzeugung und den Betrieb einer Instanz für ein einer IoT-Vorrichtung entsprechendes virtuelles Objekt zu verwalten,
wobei der Instanzenmanager (110) umfasst:
einen Instanzenpool (114), welcher dafür konfiguriert ist, die Instanz zu halten;
einen Nachrichten-Router (112), welcher dafür konfiguriert ist, einen Datenstrom gemäß der Instanz zu filtern und einen gefilterten Ergebniswert zusammen mit dem Datenstrom zu übertragen;
einen Instanz-Lebenszyklusmanager (115), welcher dafür konfiguriert ist, die in dem Instanzenpool (114) gehaltene Instanz gemäß dem gefilterten Ergebniswert wiederzuverwenden oder das Aufrufen einer Instanz gemäß dem gefilterten Ergebniswert zu überspringen, wobei das virtuelle Objekt, VO, Informationen umfasst, welche angeben, ob das Filtern an dem Nachrichten-Router gemäß einer Eigenschaft der entsprechenden IoT-Vorrichtung durchzuführen ist,
wobei der Nachrichten-Router (112) dafür konfiguriert ist, festzustellen, ob, gemäß den in dem virtuellen Objekt enthaltenen Informationen, Daten einer Schnittstelle des virtuellen Objekts zu filtern sind, und
wobei, wenn die Daten der Schnittstelle des virtuellen Objekts zu filtern sind, der Nachrichten-Router (112) dafür konfiguriert ist, den Datenstrom zu filtern,
wobei der Nachrichten-Router (112) dafür konfiguriert ist, festzustellen, ob Daten der Schnittstelle des virtuellen Objekts zu filtern sind, und der Lebenszyklus-Manager dafür konfiguriert ist, gemäß einem von dem Nachrichten-Router übertragenen Merker das unnötige Aufrufen der Instanz zu überspringen oder gemäß dem Merker die Instanz wiederzuverwenden, welche zuvor in dem Instanzen-Pool gehalten wurde.

2. Servicesystem nach Anspruch 1, wobei der Nachrichten-Router (112) Rohdaten durch eine vorgegebene Strom-Fenstergröße vergleicht, Merkerinformationen gemäß dem Vergleichsergebnis erzeugt, welche eine Änderung oder Nicht-Änderung der Rohdaten anzeigen, und die erzeugten Merkerinformationen zusammen mit dem Datenstrom an den Instanz-Lebenszysklusmanager (115) überträgt.

3. Servicesystem nach Anspruch 2, wobei die Merkerinformationen Informationen umfassen, welche eines von Änderung und Nicht-Änderung von Daten des Datenstroms anzeigen.

4. Servicesystem nach Anspruch 1, wobei der gefilterte Ergebniswert Informationen über eines von Änderung und Nicht-Änderung von Daten des Datenstroms enthält, und
wobei, wenn die Daten gemäß dem gefilterten Ergebniswert gleich sind, der Instanz-Lebenszyklusmanager (115) die in dem Instanzenpool gehaltene Instanz wiederverwendet oder das Aufrufen einer Instanz für eine Nachricht der IoT-Vorrichtung überspringt.

5. Leistungsverbesserungsverfahren in einer Internet der Dinge, IoT, - Umgebung, umfassend:
Empfangen einer Nachricht einer IoT-Vorrichtung durch einen Nachrichten-Router (112) eines Instanzenmanagers (110), welcher dafür konfiguriert ist, in einem Servicesystem enthalten zu sein und die Erzeugung und den Betrieb einer Instanz für ein der IoT-Vorrichtung entsprechendes virtuelles Objekt, VO, zu verwalten;
Filtern von Daten der Nachricht durch den Nachrichten-Router (112); und
Aufrufen eines Instanz-Lebenszyklusmanagers (115) des Instanzenmanagers (110) zusammen mit einem Ergebniswert des Filterns der Daten durch den Nachrichten-Router (112), wobei das der IoT-Vorrichtung entsprechende virtuelle Objekt Informationen umfasst, welche angeben, ob gemäß einer Eigenschaft der IoT-Vorrichtung das Filtern an dem Nachrichten-Router (112) durchzuführen ist,
ferner umfassend:
Abstimmen eines Merkers des virtuellen Objekts gemäß Schnittstelleninformationen durch den Nachrichten-Router; und Feststellen, ob die empfangene Nachricht für eine Schnittstelle des virtuellen Objekts zu filtern ist, durch den Nachrichten-Router (112), Feststellen, ob Daten der Schnittstelle des virtuellen Objekts an dem Nachrichten-Router zu filtern sind, und Überspringen von unnötigem Aufrufen der Instanz gemäß einem von dem Nachrichten-Router übertragenen Merker oder Wiederverwenden der zuvor in einem Instanzenpool gehaltenen Instanz gemäß dem Merker an dem Instanz-Lebenszyklusmanager.

6. Leistungsverbesserungsverfahren nach Anspruch 5, wobei der Ergebniswert des Filterns der Daten Informationen umfasst, welche anzeigen, dass die Daten der Nachricht von vorherigen Daten aus geändert sind oder die gleichen wie die vorherigen Daten sind, und wobei, wenn gemäß dem Ergebniswert des Filterns der Daten die Daten die gleichen wie die vorherigen Daten sind, der Instanz-Lebenszyklusmanager (115) eine in einem Instanzenpool (114) gehaltene Instanz wiederverwendet oder das Aufrufen einer Instanz für die Nachricht überspringt.

7. Leistungsverbesserungsverfahren nach Anspruch 5, wobei der Ergebniswert des Filterns der Daten Merkerinformationen umfasst, welche anzeigen, ob die Daten der Nachricht von vorherigen Daten aus geändert sind oder die gleichen wie die vorherigen Daten sind; und wobei das Aufrufen des Instanz-Lebenszyklusmanagers (115) umfasst: Übertragen der Nachricht zusammen mit den Merkerinformationen an den Instanz-Lebenszyklusmanager (115).

8. Leistungsverbesserungsverfahren in einer Internet der Dinge, IoT, - Umgebung, umfassend:
Verifizieren eines Merkerwerts eines virtuellen Objekts, VO, gemäß einem Aufruf von einem Nachrichten-Router eines in einem Servicesysem enthaltenen Instanzenmanagers (110) durch einen Instanz-Lebenszyklusmanager (115) des Instanzenmanagers;
Wiederverwenden einer in einem Instanzenpool (114) des Instanzenmanagers gehaltenen Instanz gemäß dem Merkerwert oder Überspringen des Aufrufens einer Instanz gemäß dem Merkerwert durch den Instanz-Lebenszyklusmanager (115), und
Übertragen einer Information über das Überspringen des Aufrufens der Instanz an den Nachrichten-Router (112), wenn das Aufrufen der Instanz übersprungen wird,
wobei die Information über das Überspringen des Aufrufens der Instanz durch eine Zuführschnittstelle des virtuellen Objekts entsprechend einer durch den Nachrichten-Router (112) empfangenen Nachricht an das virtuelle Objekt übertragen wird.

9. Leistungsverbesserungsverfahren nach Anspruch 8, wobei der Merkerwert eine Information umfasst, welche ein Ergebniswert des Filterns einer Nachricht einer IoT-Vorrichtung ist, nachdem der Nachrichten-Router (112) die Nachricht der IoT-Vorrichtung empfängt, und angibt, ob Daten der Nachricht von vorherigen Daten aus geändert sind oder die gleichen wie die vorherigen Daten sind.

10. Leistungsverbesserungsverfahren nach Anspruch 8, wobei das Wiederverwenden der Instanz oder das Überspringen der Instanz umfasst:
Wiederverwenden der in dem Instanzenpool gehaltenen Instanz oder Überspringen der Instanz, wenn gemäß dem Merkerwert festgestellt wird, dass in einer Nachricht einer IoT-Vorrichtung enthaltene Daten die gleichen wir vorherige Daten sind; und
Aufrufen der entsprechenden Instanz, wenn die in der Nachricht enthaltenen Daten von den vorherigen Daten aus geändert sind.

## Revendications

1. Système de service dans un environnement Internet des objets (IoT), comprenant :
un gestionnaire d'instance (110) configuré pour gérer la génération et le fonctionnement d'une instance d'un objet virtuel correspondant à un dispositif IoT,
dans lequel le gestionnaire d'instance (110) comprend :
une zone d'instance (114) configurée pour contenir l'instance ;
un routeur de messages (112) configuré pour filtrer un flux de données selon l'instance et pour transmettre une valeur de résultat filtrée avec le flux de données ;
un gestionnaire de cycle de vie d'instance (115) configuré pour réutiliser l'instance contenue dans la zone d'instance (114), selon la valeur de résultat filtrée ou pour ignorer l'appel d'une instance, selon la valeur de résultat filtrée, dans lequel l'objet virtuel, VO, comprend des informations indiquant si un filtrage doit être réalisé sur le routeur de messages, selon une caractéristique du dispositif IoT correspondant,
dans lequel le routeur de messages (112) est configuré pour déterminer si les données d'une interface de l'objet virtuel doivent être filtrées, selon les informations incluses dans l'objet virtuel, et
dans lequel, lorsque les données de l'interface de l'objet virtuel doivent être filtrées, le routeur de messages (112) est configuré pour filtrer le flux de données,
de sorte que le routeur de messages (112) est configuré pour déterminer si les données de l'interface de l'objet virtuel doivent être filtrées, et que le gestionnaire du cycle de vie de l'instance est configuré pour ignorer l'appel inutile de l'instance, selon un drapeau transmis par le routeur de messages ou pour réutiliser l'instance précédemment contenue dans la zone d'instance, selon le drapeau.

2. Système de service de la revendication 1, dans lequel le routeur de messages (112) compare les données brutes au moyen d'une taille de fenêtre de flux prédéterminée, génère des informations de drapeau indiquant un changement ou un non changement des données brutes, selon le résultat de la comparaison, et transmet les informations de drapeau générées avec le flux de données au gestionnaire de cycle de vie d'instance (115).

3. Système de service de la revendication 2, dans lequel les informations de drapeau comprennent des informations indiquant un d'un changement et d'un non changement de données du flux de données.

4. Système de service de la revendication 1, dans lequel la valeur de résultat filtrée comprend des informations sur un d'un changement et d'un non changement de données du flux de données, et
dans lequel, lorsque les données sont identiques, selon la valeur de résultat filtrée, le gestionnaire du cycle de vie d'instance (115) réutilise l'instance contenue dans la zone d'instance ou ignore l'appel d'une instance pour un message du dispositif IoT.

5. Procédé d'amélioration des performances dans un environnement Internet des objets, IoT, comprenant :
la réception d'un message d'un dispositif IoT, par un routeur de messages (112) d'un gestionnaire d'instance (110) configuré pour être inclus dans un système de service et pour gérer la génération et le fonctionnement d'une instance pour un objet virtuel, VO, correspondant au dispositif IoT ;
le filtrage des données du message par le routeur de messages (112) ; et
l'appel d'un gestionnaire de cycle de vie d'instance (115) du gestionnaire d'instance (110) avec une valeur de résultat de filtrage des données par le routeur de messages (112)
dans lequel l'objet virtuel correspondant au dispositif IoT comprend des informations indiquant si un filtrage doit être réalisé sur le routeur de message (112), selon une caractéristique du dispositif IoT,
comprenant, en outre :
l'appariement d'un identifiant de l'objet virtuel, selon des informations d'interface, par le routeur de messages ; et
la détermination si le message reçu doit être filtré pour une interface de l'objet virtuel, par le routeur de messages (112),
la détermination si les données de l'interface de l'objet virtuel doivent être filtrées au routeur de messages, et l'ignorance d'un appel inutile de l'instance, selon un drapeau transmis par le routeur de messages ou la réutilisation de l'instance précédemment contenue dans une zone d'instance, selon le drapeau au gestionnaire de cycle de vie d'instance.

6. Procédé d'amélioration de la revendication 5, dans lequel la valeur de résultat de filtrage des données comprend des informations indiquant que les données du message sont changées par rapport aux données précédentes ou sont identiques aux données précédentes, et
dans lequel, lorsque les données sont identiques aux données précédentes, selon la valeur de résultat de filtrage des données, le gestionnaire de cycle de vie d'instance (115) réutilise une instance contenue dans une zone d'instance (114) ou ignore l'appel d'une instance pour le message.

7. Procédé d'amélioration de la revendication 5, dans lequel la valeur de résultat de filtrage des données comprend des informations de drapeau indiquant si les données du message sont changées par rapport aux données précédentes ou sont identiques aux données précédentes, et
dans lequel, l'appel du gestionnaire de cycle de vie d'instance (115) comprend :
la transmission du message avec les informations de drapeau au gestionnaire de cycle de vie d'instance (115).

8. Procédé d'amélioration des performances dans un environnement Internet des objets, IoT, comprenant :
la vérification d'une valeur de drapeau d'un objet virtuel, VO, selon l'appel d'un routeur de messages d'un gestionnaire d'instance (110) inclus dans un système de service, par un gestionnaire de cycle de vie d'instance (115) du gestionnaire d'instance ;
la réutilisation d'une instance contenue dans une zone d'instance (114) du gestionnaire d'instance, selon la valeur de drapeau ou l'ignorance de l'appel d'une instance, selon la valeur de drapeau, par le gestionnaire de cycle de vie d'instance (115), et
lorsque l'appel de l'instance est ignoré, la transmission d'informations d'ignorance d'appel d'instance au routeur de messages (112),
dans lequel les informations d'ignorance d'appel d'instance sont transmises à l'objet virtuel par une interface d'alimentation de l'objet virtuel, correspondant à un message reçu par le routeur de messages (112).

9. Procédé d'amélioration des performances de la revendication 8, dans lequel la valeur de drapeau comprend des informations qui sont une valeur de résultat de filtrage d'un message d'un dispositif IoT, après réception par le routeur de messages (112) du message du dispositif IoT, et indique si les données du message sont changées par rapport aux données précédentes ou sont identiques aux données précédentes.

10. Procédé d'amélioration des performances de la revendication 8, dans lequel la réutilisation de l'instance ou l'ignorance de l'instance comprend :
la réutilisation de l'instance contenue dans la zone d'instance ou l'ignorance de l'appel de l'instance, lorsqu'il est déterminé que des données incluses dans un message d'un dispositif IoT sont identiques aux données précédentes, selon la valeur de drapeau, et
l'appel de l'instance correspondante, lorsque les données incluses dans le message sont changées par rapport aux données précédentes.
